# EUROPEAN PATENT SPECIFICATION

(11) **EP 1 376 059 B1**
(45) Date of publication and mention of the grant of the patent: **15.07.2009**
(21) Application number: 03251367.3
(22) Date of filing: 06.03.2003
(51) Int. Cl.: G01C 21/26

(54) **Method of providing location-based advertising with route information**
Verfahren zum Bereitstellen von lagebasierter Werbung mit Routeninformation
Procédé pour fournir de la publicité fondée sur la position avec de l'information de route

(30) Priority: 27.06.2002 US 184394
(43) Date of publication of application: 02.01.2004
(73) Proprietor: Navteq North America, LLC, Chicago, IL 60606 (US)
(72) Inventor: Dougherty, Christopher, Highland, Illinois 60035 (US); Guido, Matthew A., Illinois 60610 (US)
(74) Representative: McLeish, Nicholas Alistair Maxwell

(56) References cited:
- EP-A- 1 102 502
- EP-A1- 1 199 899
- EP-A2- 1 085 484
- WO-A-01/69570
- WO-A2-01/29573
- JP-A- 8 138 193
- US-A1- 2002 027 511
- US-A1- 2002 062 246
- US-A1- 2002 065 604
- US-A1- 2002 067 289

## Description

### BACKGROUND OF THE INVENTION

The present invention relates to a method of providing location-based advertising and route information from an end user's current position to a point of interest associated with the advertising.

Persons who travel through a geographic region can use different types of mobile or portable computing platforms to obtain various geographically-related features and services. Mobile or portable computing platforms that provide geographically-related features and services include dedicated computing devices and general purpose computing devices. Dedicated computing devices include in-vehicle navigation systems and personal (i.e., portable or hand-held) navigation systems. General purpose computing devices include devices, such as portable personal computers (e.g., notebook computers) and personal digital assistants (e.g., PDAs). General purpose computing devices can provide geographically-related features and services by operating navigation application software or by using geographic data. Mobile or portable computing platforms that provide geographically-related features and services include standalone systems that have geographic data and navigation application software installed locally, client devices that access geographic data or navigation application software located at a remote location, and hybrid devices that have some geographic data or navigation application software installed locally but obtain or use geographic data or navigation application software located at a remote location.

Some of the various geographically-related features and services provided by the different types of mobile or portable computing platforms include route calculation and guidance. For example, some mobile or portable computing platforms are able to provide users with an optimum route to travel by roads between locations in a geographic region. Using input from an end user, and optionally from equipment that can determine the end user's physical location (such as a GPS system), a navigation application program used by a mobile or portable computing platform system examines various paths between two locations to determine an optimum route to travel from a starting location to a destination locations in the geographic region. The user of the mobile or portable computing platform is then provided with information about the optimum route in the form of instructions that identify the maneuvers required to be taken by the end user to travel from the starting location to the destination location.

Another geographically-related feature provided by some mobile or portable computing platforms is business or person finding services (e.g., electronic yellow or white pages). These services can identify addresses of individuals or businesses. These services can also identify for a user which businesses of a certain type (e.g., Chinese restaurants) are located within a given range (e.g., 3 miles) of a given location.

Although present mobile or portable computing platforms that provide geographically-related features and services are able to provide many useful advantages, there continues to be room for improvement. One area in which there is room for improvement relates to providing information to end users based upon their location. Some types of information, such as advertising, can be more effective or useful if it is restricted to only certain specific locations. Another area for improvement relates to providing route information from an end user's current position to a point of interest associated with the advertising.

US2002/0027511 discloses a system to ensure that only information corresponding to a travelling route of a mobile body (such as a car) is displayed at an information terminal at that mobile body.

### SUMMARY OF THE INVENTION

According to an aspect of the invention, there is provided a method according to claim 1. According to another aspect of the invention, there is provided a system according to claim 19.

A method of delivering advertising to mobile computing platforms is disclosed. A geographic database contains data entities that represent geographic features, such as roads, located in a geographic region. Advertising zones are defined within the geographic region. Associated with at least some of the data entities that represent geographic features are data that indicate in which of the advertising zones the represented geographic feature is located. Advertisers are allowed to associate advertising messages with the advertising zones. The mobile computing platforms are provided with geographically-related services that use the geographic database. As a user of a mobile computing platform travels in the geographic region, the location of the mobile computing platform is determined. The user of the mobile computing platform is provided with the advertising message associated with the advertising zone in which the mobile computing platform is determined to be located. A route from the position of the mobile computing platform to a point of interest associated with the advertising message is computed

### BRIEF DESCRIPTION OF THE DRAWINGS

Figure 1 shows a map of a geographic region and is used to describe an embodiment for organizing the data representing the geographic features located in the geographic region.
Figure 2 is a block diagram of a geographic database that represents the geographic region of Figure 1.
Figure 3 is a block diagram showing a road segment data record contained in the geographic database of Figure 2.
Figure 4 is a block diagram showing a point of interest data record contained in the geographic database of Figure 2.
Figure 5 illustrates formation of advertising zones within the geographic region of Figure 1.
Figure 6 is a block diagram showing an advertising zone data record contained in the geographic database of Figure 2.
Figure 7 is a block diagram showing an advertising zone index contained in the geographic database of Figure 2.
Figure 8 is a diagram of a navigation system located in the geographic region of Figure 1.
Figure 9 is a flow chart of the operations of a navigation services server for providing location-based advertising with routing information.
Figures 10A and 10B illustrate accessibility-based advertising zones used in connection with alternative embodiments.
Figure 11 illustrates formation and use of virtual billboard locations used in connection with another alternative embodiment.
Figure 12 is a block diagram showing a physical billboard data record contained in the geographic database of Figure 2.
Figure 13 is a flow chart of the operations of a navigation services server for providing billboard information for a physical billboard.

### DETAILED DESCRIPTION OF THE

### PRESENTLY PREFERRED EMBODIMENTS

### I. THE GEOGRAPHIC MAP DATABASE

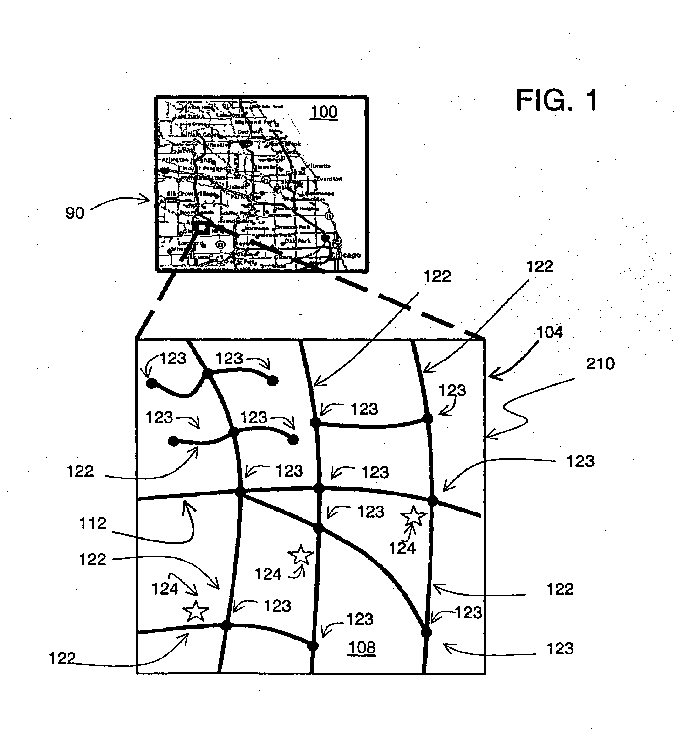

Figure 1 shows a map 90 of a geographic region 100. The geographic region 100 may correspond to a metropolitan or rural area, a state, a country, or combinations thereof, or any other area of comparable size. Located in the geographic region 100 are physical features, such as roads, points of interest (including businesses, municipal facilities, etc.), lakes, rivers, railroads, municipalities, etc.

Figure 1 also includes an enlarged map 104 of a portion 108 of the geographic region 100. The enlarged map 104 illustrates part of the road network 112 in the geographic region 100. The road network 112 includes, among other things, roads and intersections located in the geographic region 100. As shown in the portion 108, each road in the geographic region 100 is composed of one or more road segments 122. A road segment 122 represents a portion of the road. Each road segment 122 is shown to have associated with it two nodes 123: one node represents the point at one end of the road segment and the other node represents the point at the other end of the road segment. The node at either end of a road segment may correspond to a location at which the road meets another road, e.g., an intersection, or where the road dead-ends.

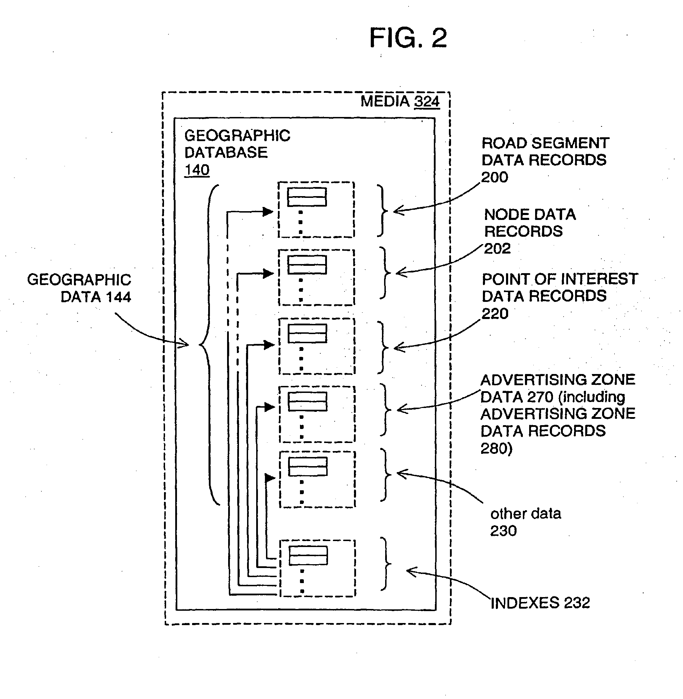

Referring to Figure 2, a geographic database 140 contains data 144 that represents some of the physical features in the geographic region (100 in Figure 1). The data 144 contained in the geographic database 140 includes data that represent the road network. In the embodiment of Figure 2, the geographic database 140 that represents the geographic region 100 contains at least one database record (also referred to as "entity" or "entry") for each road segment 122 in the geographic region (100 in Figure 1). In the geographic database 140 that represents the geographic region 100, there is also a database record (or "entity" or "entry") for each node 123 in the geographic region 100. (The terms "nodes" and "segments" represent only one terminology for describing these physical geographic features and other terminology for describing these features is intended to be encompassed within the scope of these concepts.)

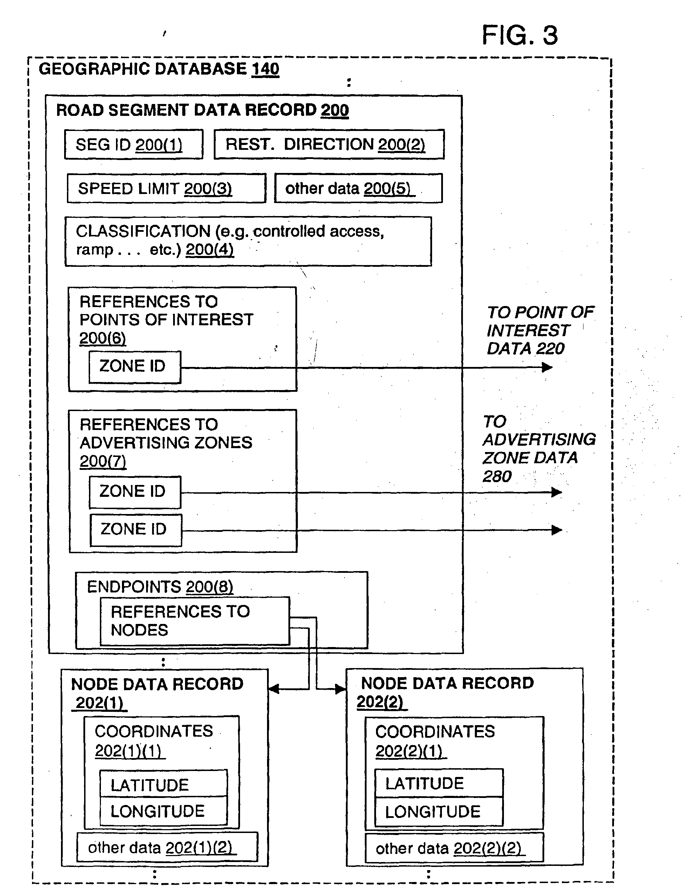

Figure 3 shows some of the components of a road segment data record 200 contained in the geographic database 140. The road segment record 200 includes a segment ID 200(1) by which the data record can be identified in the geographic database 140. Each road segment data record 200 has associated with it information (such as "attributes", "fields", etc.) that describes features of the represented road segment. The road segment data record 200 may include data 200(2) that indicate the restrictions, if any, on the direction of vehicular travel permitted on the represented road segment. The road segment data record 200 includes data 200(3) that indicate a speed limit or speed category (i.e., the maximum permitted vehicular speed of travel) on the represented road segment. The road segment data record 200 may also include data 200(4) indicating whether the represented road segment is part of a controlled access road (such as an expressway), a ramp to a controlled access road, a bridge, a tunnel, a toll road, a ferry, and so on.

The road segment data record 200 also includes data 200(8) providing the geographic coordinates (e.g., the latitude and longitude) of the endpoints of the represented road segment. In one embodiment, the data 200(8) are references to the node data records 202 that represent the nodes corresponding to the endpoints of the represented road segment.

The road segment data record 200 may also include or be associated with other data 200(5) that refer to various other attributes of the represented road segment. The various attributes associated with a road segment may be included in a single road segment record, or may be included in more than one type of record which are cross-referenced to each other. For example, the road segment data record 200 may include data identifying what turn restrictions exist at each of the nodes which correspond to intersections at the ends of the road portion represented by the road segment, the name or names by which the represented road segment is known, the street address ranges along the represented road segment, and so on.

Each of the node data records 202 may have associated information (such as "attributes", "fields", etc.) that allows identification of the road segment(s) that connect to it and/or its geographic position (e.g., its latitude and longitude coordinates). For the embodiment shown in Figure 3, the node data records 202(1) and 202(2) include the latitude and longitude coordinates 202(1)(1) and 202(2)(1) for their node. The node data records 202(1) and 202(2) also include other data 202(1)(2) and 202(2)(2) for their node.

Referring to Figure 1, the portion 108 of the geographic region 100 includes points of interest 124. Points of interest include businesses, municipal buildings, historical markers, buildings, specifically designated geographic locations, etc. In one embodiment, the geographic database 140 contains data that represent the points of interest 124. As shown in Figure 2, the geographic database 140 contains point of interest data 220. The point of interest data 220 represent the various points of interest 124 located in the geographic region 100. The points of interest data 220 include point of interest data records 222.

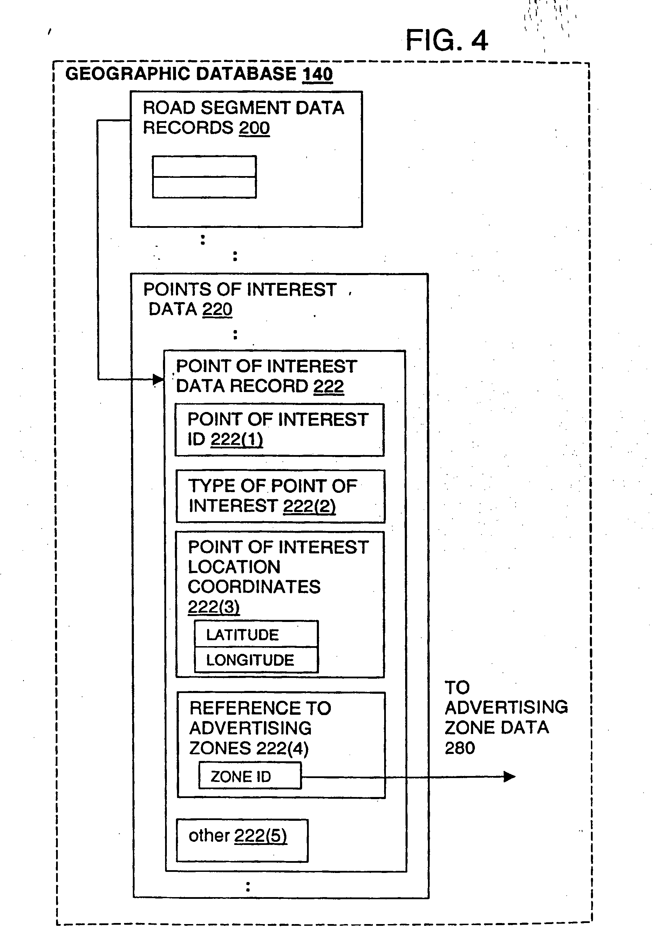

Figure 4 shows some of the components of a point of interest data record 222 contained in the geographic database 140. The point of interest data record 222 includes a point of interest ID 222(1) by which the data record can be identified in the geographic database 140. Each point of interest data record 222 has associated with it information (such as "attributes", "fields", etc.) that describes features of the represented point of interest. The point of interest data record 222 may include data 222(2) that indicates a type (e.g., the type of point of interest, such as restaurant, hotel, city hall, police station, historical marker, ATM, golf course, etc.). The point of interest data record 222 may also include data 222(3) providing the geographic coordinates (e.g., the latitude and longitude) of the represented point of interest.

The point of interest data record 222 may also include or be associated with other data 222(5) that refer to various other attributes of the represented point of interest. The various attributes associated with the point of interest may include a phone number, hours of operation, etc. Referring to Figure 3, the road segment data record 200 includes data 200(6) that identifies the point(s) of interest 220 located on the represented road segment. In the embodiment of Figure 3, data 200(6) that identifies the point(s) of interest 220 refers to the point of interest data record(s) 222 that represent the point(s) of interest 124 located on the represented road segment.

The geographic database 140 may also include other kinds of data 230. The other kinds of data 230 may represent other kinds of geographic features or anything else. The geographic database 140 also includes indexes 232. The indexes 232 may include various types of indexes that relate the different types of data to each other or that relate to other aspects of the data contained in the geographic database 140.

### II. ADVERTISING ZONES

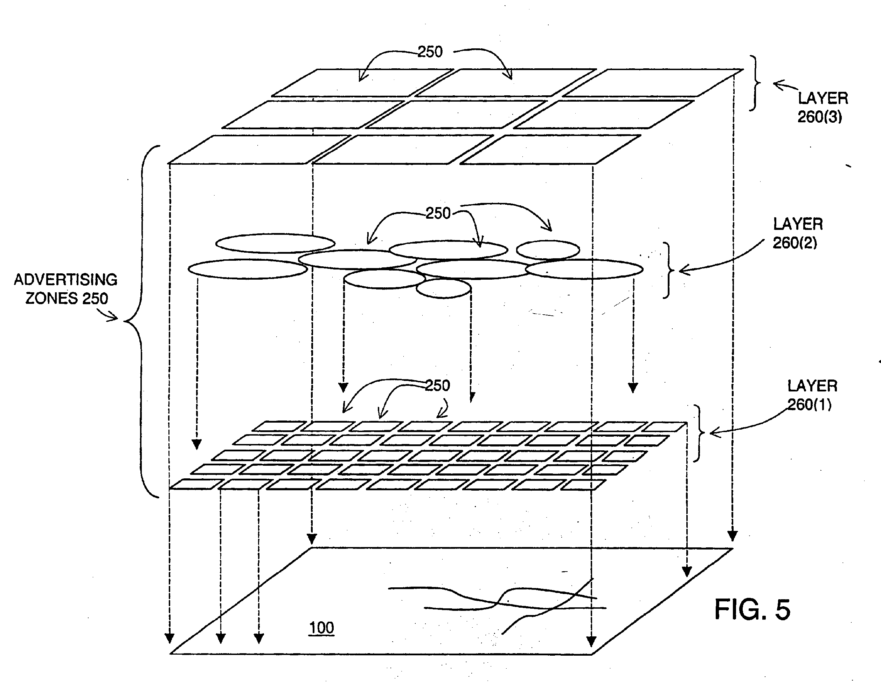

Figure 5 shows a perspective view of the geographic region 100. In a present embodiment, the developer of the geographic database 100 defines a plurality of advertising zones 250 within the geographic region 100. The term advertising zone is used for convenience and is not intended to be limited for the purpose of advertising but rather the zones may be used for any other purpose. The advertising zones may also be referred to as location referencing zones, location referencing entities, emergency warning zones, traffic zones, etc. The advertising zones are defined as bounded areas located within the geographic region 100. The advertising zones 250 may be all the same size and shape. Alternatively, as shown in Figure 5, the advertising zones 250 may be different sizes and/or shapes.

In the embodiment of Figure 5, the advertising zones are defined in separate layers 260(1), 260(2)... 260(n). Each layer includes a separate plurality of advertising zones. The advertising zones defined in one layer may overlap the advertising zones defined in another of the layers. Within a layer, each advertising zone may be distinct from every other advertising zone within the layer, i.e., within a layer, advertising zones do not overlap. Alternatively, advertising zones within a layer may overlap to some extent. Also, the advertising zones within a layer may be coextensive with the entire geographic region or alternatively, the advertising zones within a layer may not be coextensive with the entire geographic region, i.e., there may be locations within the geographic region that are not encompassed within an advertising zone.

The sizes of the advertising zones and the boundaries of the advertising zones are determined so that each advertising zone has an appropriate size and boundaries for targeted advertising. Different types of businesses have different kinds of advertising requirements. As an example, a fast food restaurant in an urban area may want to advertise within a three mile area around the location of the restaurant, but not beyond three miles because it is unlikely that many consumers would travel more than three miles to get to the restaurant. On the other hand, a department store may want to advertise within 20 miles of its location, but not beyond 20 miles. Thus, different sizes of advertising zones are provided for different kinds of businesses.

Each of the different layers of advertising zones may be identified by zone type. Various different types of advertising zone may be defined.

There are other considerations that can affect the sizes and boundaries of the advertising zones. One consideration is premium advertising. For example, a business, such as a restaurant, may want to be an exclusive advertiser for a certain area. Another consideration is balance. If too many businesses of the same type advertise in a certain area, the value of the advertising diminishes. Another consideration is population density. Persons in sparsely populated areas may be willing to drive further to get to the locations of businesses than persons in densely populated areas. Accordingly, advertising zones in sparsely populated areas may be larger, in general, than corresponding advertising zones in densely populated areas.

Because the sizes of the advertising zones are determined based on appropriate sizes for targeted advertising, the boundaries of advertising zones do not necessarily correspond to the boundaries of cities, towns, counties, etc. Likewise, the boundaries of advertising zones do not necessarily correspond to the rectangular areas defined for data parcels (as described in U.S. Pat. No. 5,974,419).

Referring to Figure 2, the geographic database 140 that represents the geographic region (100 in Figure 1) includes advertising zone data 270. The advertising zone data 270 represent the advertising zones (250 in Figure 4) that have been defined by the geographic database developer for the region (100 in Figure 1). In a present embodiment, the advertising zones 250 are represented by advertising zone data records 280. In this embodiment, each advertising zone 250 is represented by an advertising zone data record 280.

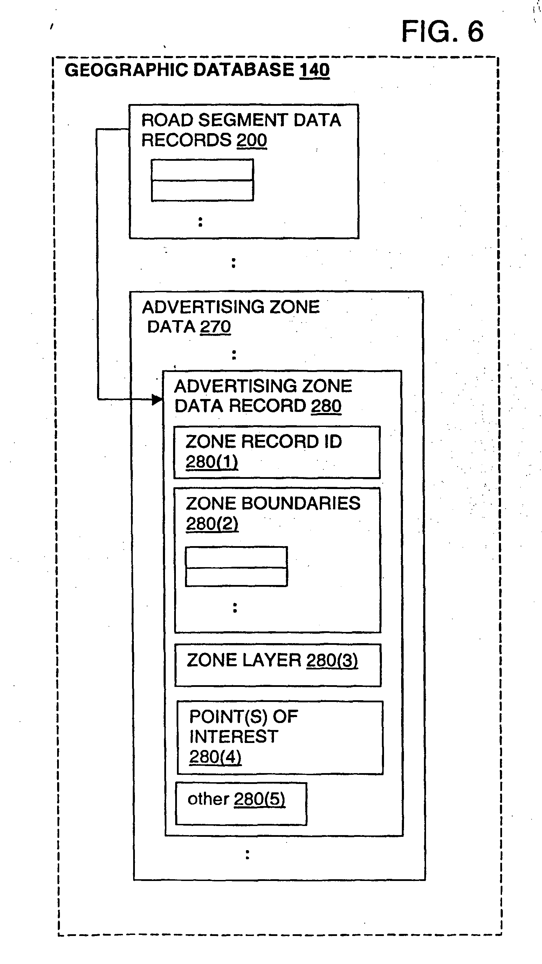

Figure 6 shows components of an advertising zone data record 280. An advertising zone data record 280 includes a zone record ID 280(1) by which the advertising zone data record is identified in the geographic database 140. In addition, the advertising zone data record 280 includes attributes that describe the represented advertising zone. In Figure 6, the advertising zone data record 280 includes zone boundary data 280(2). The boundary data 280(2) indicate the boundaries of the represented advertising zone. The zone boundary data 280(2) may include the geographic coordinates of the boundaries. Alternatively, the zone boundary data 280(2) may include a radius from a point of interest, such as a restaurant. According to another alternative, the zone boundary data 280(2) may be defined in terms of the geographic database structure, e.g., in terms of parcel boundaries. According to yet another alternative, the zone boundary data 280(2) may be defined in terms of geographic features, e.g., streets, rivers, etc. The zone boundaries may also be defined in terms of the road segments included within the advertising zone. The zone boundary data 280(2) may include any type of information that sufficiently defines the boundaries of the represented advertising area. For example, the zone boundary data may include data relating to a driving distance and/or travel time from a location, such as a point of interests. Additionally, the zone boundary data may include a direction of travel for defining the zone boundaries.

The advertising zone data record 280 also includes a zone layer ID 280(3). The zone layer ID 280(3) identifies the layer (260 in Figure 5) in which the represented advertising zone is located. The advertising zone data record 280 may also include points of interest data 280(4) that identifies points of interest associated with represented advertising zone 250. In one embodiment, the points of interest associated with the represented advertising zone are businesses, such as restaurants and retail stores. A single point of interest may be within the represented advertising zone or many points of interest may be within the represented advertising zone. The points of interest data 280(4) may include location information for the points of interest, such as latitude and longitude coordinates or address information. The points of interest data 280(4) may also include data that refers to the point of interest data records 222 for the represented point of interest 124. The advertising zone data record 280 may also include other data 280(5).

Referring to Figure 3, the road segment data record 200 includes data 200(6) that identifies the advertising zone(s) 250 in which the represented road segment is located. In the embodiment of Figure 3, data 200(6) that identifies the advertising zones) 250 refers to the advertising zone data records 280 that represent the advertising zones 250 in which the represented road segment is located. Referring to Figure 4, the point of interest data record 222 includes data 222(4) that identifies the advertising zone(s) 250 in which the represented point of interest is located. In the embodiment of Figure 4, data 222(4) that identifies the advertising zone(s) 250 refers to the advertising zone data records 280 that represent the advertising zones 250 in which the represented point of interest is located. Additionally, indexes 232 may be used to cross-reference the point of interest and the advertising zone in which the point of interest is located.

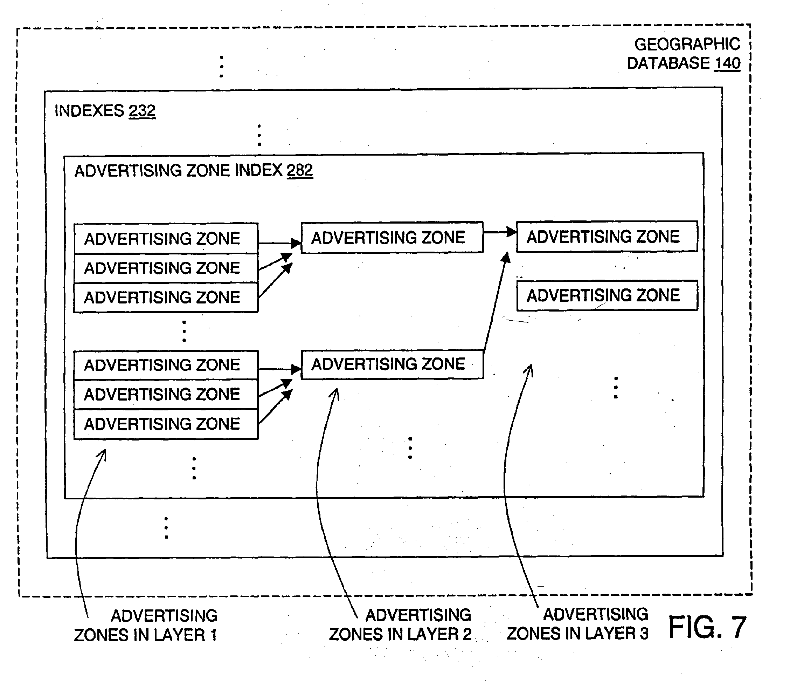

As mentioned above, advertising zones 250 may be organized in layers 260. The relationship between the advertising zones in one layer and the advertising zones in another layer may be represented in an index. Referring to Figure 7, according to one embodiment, the geographic database 140 includes an advertising zone index 282. The advertising zone index 282 is included in the geographic database 140 among the indexes 232. The advertising zone index 282 indicates relationships between advertising zones in different layers. The advertising zone index 282 may indicate which advertising zones in different layers correspond to the same areas. For an advertising zone in one layer, the advertising zone index may indicate which advertising zone(s) in another layer overlaps the advertising zone.

### III. NAVIGATION SYSTEM

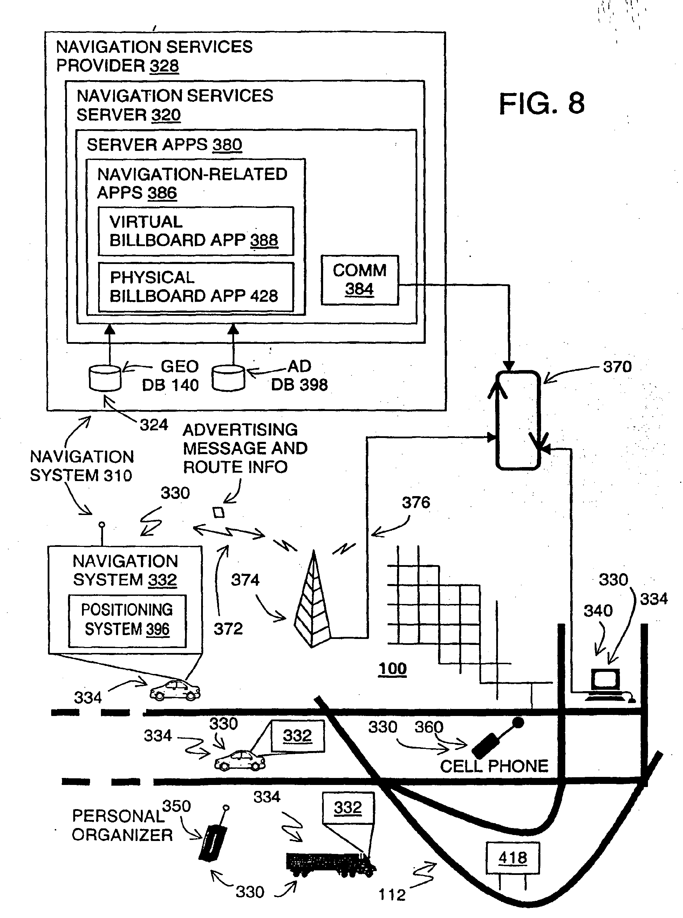

As mentioned above, there are various different kinds of mobile or portable computing platforms that provide geographically-related features and services. One embodiment of a navigation system is described in connection with Figure 8.

Figure 8 shows the geographic region 100 and a portion of the road network 112. A navigation system 310 serves end users (e.g., vehicle drivers and passengers, as well as other persons) in the geographic region 100. The navigation system 310 is used by the end users to obtain navigation-related services (including map-related services) with respect to the geographic region 100. The navigation-related services include information about travel along the road network 112, including route calculation and guidance, people and business finding services (e.g., electronic yellow and white pages), maps, point of interest searching, destination selection, and so on.

The navigation system 310 is a combination of hardware, software and data. The navigation system 310 includes remote components (i.e., hardware, software or data located at a central location that is remote from the end users) and local components (i.e., hardware, software, or data located physically with each end user).

Included among the remote components of the navigation system 310 is a navigation services server 320. The navigation services server 320 includes appropriate computer hardware and software to run network applications. The navigation services server 320 is maintained and operated by a navigation services provider 328.

Associated with the navigation services server 320 is the geographic database 140. The geographic database 140 is stored on a storage medium 324 that is accessible to the navigation services server 320. The storage medium 324 may include one or more hard drives or other storage media. The geographic database 140 may be organized to facilitate performing navigation-related functions. Methods of organizing a geographic database to enhance the performance of certain navigation-related functions are described in U.S. Pat. Nos. 5,974,419, 5,968,109 and 5,953,722 the entire disclosures of which are incorporated by reference herein. In one embodiment, the geographic database 140 is developed by Navigation Technologies Corporation of Chicago, Illinois. However, it is understood that the inventive concepts disclosed herein are not restricted to any particular source of data.

The local components of the navigation system 310 include the various computer platforms 330 operated by the end users to request and obtain navigation-related and map-related features and geographic data from the navigation services provider 328. These various computer platforms 330 (also referred to as "end user computing platforms" or "client computing platforms") may include navigation system units 332 located in vehicles 334, personal computers 340, personal organizers (e.g., PDAs, PalmPilot®-type devices) 350, wireless phones 360, or any other types of computing devices that have the appropriate hardware and software to access the navigation services provider 328 over a data network 370.

Referring to the embodiment of Figure 8, some of the end user computing platforms 330 include positioning equipment 396. The positioning equipment 396 may include a GPS system, inertial sensors, wheel pulse sensors, etc. Using this positioning equipment 396, the position of the end user's computing platform 330 can be determined. Methods for determining position are disclosed in U.S. Pat. No. 6,192,312, the entire disclosure of which is incorporated by reference herein.

The data network 370 may use any suitable technology and/or protocols that are currently available, as well as technology and/or protocols that become available in the future. For example, the data network may use WAP, TCP/IP, etc. More than one protocol may be used in the data network 370 with appropriate conversions. The data network 370 may be part of, or connected to, the Internet.

A portion of the network 370 may include a wireless portion 372. The wireless portion 372 of the data network 370 enables two-way communication between the mobile end user computing platforms 330 and the service provider 328. The wireless portion 372 may be implemented by any suitable form of wireless communication, including cellular, PCS, satellite, FM, radio, or technologies that may be developed in the future. The wireless portion 372 may include one or more transmitters 374, such as a transponder tower, an antenna tower, an FM tower, satellites, or other suitable means. The transmitters 374 include an appropriate communication link 376 to the network 370 and/or service provider 328. This link 376 may be land-based or may be wireless. The transmitters 374 include suitable technology that enables two-way communication between the service provider 328 and the mobile end user computing platforms 330.

The navigation system 310 of Figure 8 can accommodate different types of end user computing platforms 330. The navigation system 310 of Figure 8 allows end users who have different types of computing platforms 330 to obtain navigation services from the navigation services provider 328 and to obtain and use geographic data provided from the navigation services provider 328. Using data that indicate the end user's positions from the position equipment 396 of the end user computing platforms 330, the navigation services server 320 may provide navigation-related services with respect to the geographic region 100.

Referring to Figure 8, server applications 380 are included on the navigation services server 320 of the navigation services provider 328. The server applications 380 may be stored on one or more hard drive(s) or other media operated by the server 320 and loaded into a memory of the server 320 to run. One of the server applications 380 is a communications application 384. The communications application 384 interfaces with the data network 370 in order to receive messages from and send messages to the end users.

Included among the server applications 380 are navigation-related applications 386. The navigation-related applications 386 use the geographic database 140 associated with the navigation services server 320 in order to provide the various different types of navigation-related services. In order to provide navigation-related features, the navigation-related applications 386 use data from the geographic database 140.

One of the navigation-related applications 386 is a route calculation application. End users may access the navigation services provider 328 to obtain a route from an origin to a destination. The route calculation application determines the route for the end user to travel along the road network (112 in Figure 1) to reach the desired destination. In order to calculate a route, the route calculation application is provided with data identifying a starting location (origin) and a desired destination location. In one embodiment, the starting location may be the end user's current position and the destination location may be a point of interest. The data used to identify the location of the point of interest may include information from the geographic database 140, such as the geographic coordinates of the point of interest, the street addresses of the point of interest, the name of the point of interest or a specification of the data entity in the geographic database 140 that represents the road segments upon which the point of interest is located. The starting location may be provided by the positioning equipment 396 of the end user's computing platform.

Given at least the identification of the starting location (origin) and the desired destination location, the route calculation application determines one or more solution routes between the starting location and the destination location. A solution route is formed of a series of connected road segments over which the end user can travel from the starting location to the destination location. When the route calculation application calculates a route, it accesses the geographic database 140 and obtains data that represent road segments around and between the starting location and the destination location. The road calculation application uses the data to determine at least one valid solution route from the starting location to the destination location.

In one embodiment, the route calculation application may attempt to find a solution route that takes the least time to travel. Each of the road segment data records 200 of the geographic database 140 has an associated default segment cost or travel time for the particular represented road segment. The segment cost or travel time for the particular represented road segment considers the type of road, such as freeway or residential street, speed limit and distance of the segment. When the route calculation application determines one or more solution routes comprising the series of connected road segments, the travel times for each of the included connected road segments is summed to provide an estimated route travel time. Based on the route travel time, the route calculation application selects the quickest route. Once the route calculation application has selected the route, the route calculation application provides an output in the form of an ordered list identifying a plurality of road segments that form the continuous navigable route between the origin and the destination. In addition, the route calculation program provides an output of an estimated route travel time.

Methods for calculating routes are disclosed in U.S. Pat. No. 6,192,314, the entire disclosure of which is incorporated by reference herein. (The methods disclosed in the aforementioned patent represent only some of the ways that routes can be calculated and the claimed subject matter herein is not limited to any particular method of route calculation. Any suitable route calculation method now known or developed in the future may be employed.)

In one embodiment, the route calculation application may consider traffic conditions to more accurately reflect actual travel time over the connected road segments and to select the quickest route. Travel times on a selected road segment may vary at certain times of the day, such as during rush hour. The route calculation application may consider the time of day and historic traffic patterns to adjust the travel time on the selected road segment. For example, the route calculation application may increase the default travel time associated with the selected road segment by thirty percent to reflect rush hour traffic conditions. In addition, the route calculation application may increase the default travel time associated with the selected road segment by a prescribed percentage based on road conditions, such as rain. The historic traffic information may be included in the road segment data records 200 of the geographic database 140. The navigation services provider 328 may provide the time of day and weather condition information to the navigation services server 320.

Furthermore, the route calculation application may consider real-time traffic information (RTTI) to more accurately reflect actual travel time over the connected road segments and to select the quickest route. The RTTI can be traffic congestion information. One way to gather RTTI is with sensors placed on the road segments to measure traffic flow. The sensors provide the traffic flow data to the navigation services server 320. Additionally, some RTTI is publicly available from various state and local government agencies. For example, the Illinois Department of Transportation provides road segment travel time reflecting traffic conditions at a publicly accessible website. Such information can be used by the navigation services sever 320 to update the current travel times for road segments. The route calculation application may use the current travel times for the various road segments to calculate the fastest route and more accurate estimated route travel time. Methods for using real-time traffic information are disclosed in U.S. Patent Application Serial Number 09/196,409, entitled "Method and System for Using Real-Time Traffic Broadcasts With Navigation Systems, filed November 19, 1998, the entire disclosure of which is incorporated by reference herein.

Another of the navigation-related applications 386 on the navigation services server 320 is a route guidance application. The route guidance application uses the output from the route calculation application to provide maneuver instructions for the end user to travel to the desired destination on the calculated route. The route guidance application generates an output comprised of a series of maneuvers derived from the list of road segments provided in the output of the route calculation application. The output of the route guidance application is provided to the end user through an user interface included on the computing platform 330. The output of the route guidance may be conveyed audibly through speech synthesis or on a visual display. Using data that indicate the end user's positions, the route guidance application on the navigation services server 320 determines the appropriate times and locations at which to provide maneuvering instructions. The route guidance maneuvers instruct the end user to turn in a specified direction at specified nodes connecting road segments of the route. Methods for providing route guidance using geographic data are disclosed in U.S. Pat. No. 6,199,013, the entire disclosure of which is incorporated herein by reference. (The methods disclosed in the aforementioned patent represent only some of the ways that route guidance can be calculated and the claimed subject matter herein is not limited to any particular method of route guidance. Any suitable route guidance method now known or developed in the future may be employed.)

### IV. SELLING OF VIRTUAL ADVERTISING SPACE

The navigation services provider (328 in Figure 8) enters into agreements with advertisers to provide location-based advertising messages to end users. The agreements with advertisers provide that advertising messages will be sent to end users based on the advertising zone(s) in which the end users are located. An advertiser can choose to send advertising messages to end users located in only a single advertising zone. An advertiser can also choose to send messages to end users in several advertising zones.

The advertising messages may be text messages, audio messages, graphics messages, or combinations of these.

There are various alternative ways that location-based advertising messages may be provided to end users. An advertiser may choose to be the exclusive advertiser for a specific advertising zone or zones. The agreement between the navigation services provider 328 and the advertiser may specify a duration of time (e.g., one month) during which advertising messages will be sent to end users located in the advertising zone(s) selected by the advertiser. The agreement between the navigation services provider 328 and the advertiser may specify how frequently advertising messages will be sent to end users in the selected advertising zone(s) (e.g., only once upon entering the advertising zone or every 15 minutes after entering the advertising zone and while still in the advertising zone). The agreement between the navigation services provider 328 and the advertiser may also specify times that advertising messages will be sent to end users in the selected advertising zone(s), between 6:00 AM and 6:00 PM. Moreover, the agreement between the navigation services provider 328 and the advertiser may specify types of end users that certain advertising messages are to be sent. For example, end users driving a minivan may receive certain family oriented advertising messages while end users driving a two-seat sports car may receive certain advertising messages directed to their demographic group.

Referring to Figure 8, the advertising messages that will be sent to end users are stored in an ad database 398 associated with the navigation services server 320. The ad database 398 may be located on the same media as the geographic database 140 or may be on another media. The advertising messages in the ad database 398 are associated with one or more advertising zones. Each advertising message in the ad database 398 may refer or point to one or more advertising zones. In the ad database, the advertising message may indicate the advertising zone to which it is related by referring to the advertising zone ID (280(1) in Figure 6). In addition, each advertising message in the ad database is associated with one or more points of interest. In the ad database, the advertising message may indicate to which point of interest it is associated with by referring to the point of interest ID (222(1) in Figure 4). Also included in the ad database is data that indicates any restrictions for delivering the advertising messages, e.g., only once, only between certain hours of the day, only on certain days of the week, etc.

### V. OPERATION

Referring to Figure 8, end users are located throughout and move about the geographic region 100. The end users use various means of transportation to move in the geographic region 100. For example, end users may use automobiles, trucks, buses, bicycles, motorcycles, trains, taxis, horses, and so on. End users may also move throughout the geographic region by foot. As the end users move throughout the geographic region, they use mobile or portable computing platforms to obtain geographically-relates services and features. As an end user travels through the geographic region 100, the position of the end user is determined. The position of the end user may be determined by positioning equipment associated with the end user's computing platform (such as positioning system 396 in Figure 8). The position of the end user may be determined by other methods. For example, the position of the end user may be determined by network-based location identification (e.g., emergency 911 services). The position of the end user may also be determined by obtaining the end user's input.

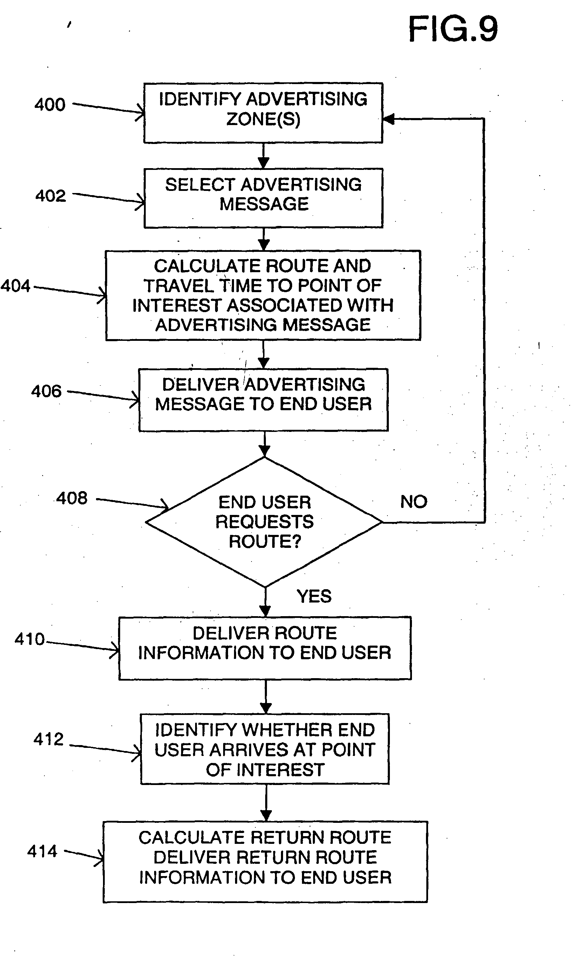

Figure 9 is a flow chart of the operations of the navigation services server 320 for providing location-based advertising with routing information according to one embodiment. Included among the server applications 380 on the navigation services server 320 is a virtual billboard application 388. The virtual billboard application 388 receives data that indicate each end user's current position. The navigation services server 320 receives the position data via the data network 370. Based on the end user's current position, the virtual billboard application 388 identifies each advertising zone (or advertising zones) in which the end user is located (step 400 in Figure 9). In an alternative embodiment, the end user's future position is determined as discussed below, and the future position is used to identify the advertising zone in which the end user will be located. The virtual billboard application 388 uses the geographic database 140 for these purposes.

In addition to identifying the advertising zones in which the end user is located, the virtual billboard application 388 may receive information identifying the end user. For example, when the navigation services server 320 receives data indicating the end user's current position, the navigation services server 320 may also receive data identifying the end user. The end user may be a registered user of the navigation services provider 328.

Once the virtual billboard application 388 has identified the advertising zone in which the end user is located, the virtual billboard application 388 retrieves from the ad database 398 the advertising messages associated with the advertising zone in which the end user is located (step 402 in Figure 9). The virtual billboard application 388 also checks the ad database 398 for any restrictions on delivery of the advertising messages. Moreover, the virtual billboard application may also select a prescribed advertising message that matches the identified end user's demographics. For example, if the identified end user drives a minivan, the advertising message selected may have a family oriented theme.

In one embodiment, the selected advertising message is associated with a point of interest. The point of interest may be located within the advertising zone or easily accessible from the advertising zone. The ad database 398 identifies the point of interest associated with the advertising message.

In one embodiment, prior to delivering the advertising message to the end user, the navigation services server 320 implements the route calculation application to provide route information from the end user's current position to the point of interest. The ad database 398 or the geographic database 140 supplies the location of the point of interest associated with the advertising message to the route calculation application. The route calculation application calculates a route and an estimated route travel time from the end user's current location to the point of interest associated with the advertising message (step 404 in Figure 9). As discussed above, the route calculation application may consider historic traffic conditions, road conditions and/or real time traffic information when calculating the route and estimated route travel time.

In addition, the route guidance application may be used to provide maneuvering instructions for the route from the end user's current position to the advertised point of interest. The route, route travel time and route guidance are supplied to the virtual billboard application 388. The virtual billboard application 388 may incorporate route, travel time and/or route guidance information into the advertising message to supply location based information to the end user. Thus, the advertising message may include information regarding the route and/or route guidance to the point of interest associated with the advertising message and/or the estimated travel time to the point of interest associated with the advertising message. For example, the advertising message may be "Joe's Diner three minutes ahead" or "Joe's Diner: turn right two miles ahead at Main Street and follow Main Street for a quarter mile." By implementing the route calculation application and the route guidance application, the advertising message may be tailored to the end-user's current position.

Assuming that there are no restrictions against sending the advertising message, the virtual billboard application 388 sends the advertising message to the end user (step 406 in Figure 9). In the embodiment of Figure 8, the advertising message is sent over the data network 370 to the end user's computing platform 330. On the end user's computing platform 330, the advertising message from the navigation services provider 320 is received and delivered to the end user. The user interface of the end user's computing platform 330 delivers the advertising message to the end user. As mentioned above, the advertising message may be audio or video. If the advertising message is audio, a speaker on the user interface of the end user's computing platform provides the advertising message. If the advertising message is video, a display screen of the end user's computing platform provides the advertising message. The advertising message may include both audio and video.

As mentioned above, the agreement between the advertiser and the navigation services provider 328 may specify the frequency of the advertising message. The advertising message may be provided only once, e.g., when the end user first enters the advertising zone to which the advertising message is associated. Alternatively, the advertising message may be provided at intervals, e.g., every 15 minutes, while the end user remains in the advertising zone.

In one embodiment, the end user may respond to the delivered advertising message. Once the advertising message has been received by the end user, the end user may request to travel to the point of interest associated with the advertising message. To respond, the end user enters an input on the user interface or makes a verbal request that is identified by the user interface of the computing platform 330. The computing platform 330 then sends the request for route information to the point of interest associated with the advertising message over the data network 370 to the navigation services server 320. At step 408, the navigation services server 320 identifies whether the end user requests route information to the point of interest associated with the advertising message. If the end user does not request to travel to the point of interest, the navigation services server returns to step 400. If the end user requests to travel to the point of interest, the previously calculated route and route guidance information are delivered to the end user over the data network 370 at step 410.

In one embodiment, the navigation services server calculates an updated route using new current position data from the end user. If some time has passed or some distance has been traversed since the delivery of the advertising message and the end user's request to travel to the point of interest, the navigation services server receives new current position information. Using the new current position, the route calculation application calculates an updated route and the route guidance application calculates updated route guidance information to the point of interest. The updated route and route guidance information is then supplied to the end user via the data network 370.

In alternative embodiments, the route calculation and delivery steps 404 and 410 in Figure 9 may occur in different sequence than illustrated. In a further embodiment, the advertising message is delivered to the end user prior to implementing the route calculation and route guidance applications. Rather in this embodiment, the route, travel time and route guidance are calculated after the navigation services server 320 receives the end user's request to travel to the point of interest associated with the delivered advertising message. With the end user's request for the route information, the navigation services server receives updated current position information from the end user. The route calculation and route guidance applications are then implemented to calculate the route information from the updated current position to the point of interest. The navigation services server 320 sends the route and route guidance information to the end user via the data network 370.

In yet another embodiment, the delivery of the advertising message and delivery of the route information of steps 406 and 410 are combined. In this embodiment, both the advertising message and route information are delivered together to the end user. The computing platform 330 stores the route information and conveys the advertising message to the end user. If the end user requests to travel to the point of interest associated with the advertising message, the computing platform 330 retrieves the route information from local memory and provides the route information with guidance maneuvers to the end user.

In one embodiment, the navigation services server monitors the position of the end user that requested the route to the point of interest. Using the position information of the end user, the navigation services server 320 identifies whether the end user arrives at the point of interest associated with the delivered advertising message (step 412 in Figure 9). Identifying whether the end user arrives at the point of interest enables the navigation services provider 328 to determine the success rate of the advertising messages. Using the success rate information, the navigation services provider can provide feedback to the advertisers and modify their advertising rates.

In one embodiment, the navigation services server 320 provides return route information to the end user from the point of interest. For the end user that arrives at the point of interest, the end user may need navigation information for returning from the point of interest to an original itinerary. The end user requests the navigation services server 320 to provide return route information. With the request, the navigation services server 320 receives data regarding an original destination from the end user via the data network 370. In another embodiment, the navigation services server 320 also receives data regarding the original itinerary route. The navigation services server then implements the route calculation and route guidance applications to calculate the return route and return route guidance to return to the original destination and/or itinerary route. The return route and return route guidance information are delivered to the end user's computing platform via the data network 370. The end user receives maneuver directions from the user interface to reconnect the end user with the original itinerary. For example, an end user has an original itinerary of travelling from City A to City B over Highway C. The end user receives an advertising message for a restaurant and travels to that restaurant. After visiting the restaurant, the end user receives routing information to return the user to the original itinerary destined for City B over Highway C.

### VI. ALTERNATIVES

### A. Other types of messages

### (1). Emergency messages

In the above embodiments, it was described how location-based advertising messages with routing information can be provided to end users of computing platforms that provide navigation services. In an alternative embodiment, other types of messages with routing information can be provided to end users of computing platforms that provide navigation services. As an example, the zones can be used to provide location-based emergency messages to end users. The emergency messages can relate to adverse weather conditions, such as tornadoes, hurricanes, hail, blizzards, ice, thunderstorms, floods, wild-fires, high temperatures or terrorist attacks. Location-based emergency messages may also relate to environmental conditions, such as hazardous waste spills and ozone warnings. With the emergency messages, routing information may also be supplied to the end user to enable travel a different route over the road network to safely avoid the emergency conditions. The routing information may include a travel time for the different route that avoids the emergency condition.

As mentioned above, there may be different types of zones. Zones used for emergency messages may be defined differently than zones used for advertising. For example, zones used for emergency messages may have different boundaries, sizes, etc. Zones used for emergency messages may be identified by type, e.g. emergency zones, in order to distinguish them from zones used for advertising purposes. According to one embodiment, an index can be used to relate emergency zones to advertising zones.

### (2). Traffic messages

In another alternative embodiment, zones can be used to provide location-based messages that provide traffic information. The traffic information can relate to all the roads within a specific zone. For example, a zone can be defined around a sports stadium. Before and after an event at the sports stadium, location-based messages with traffic congestion around the sports stadium can be provided to the end users located in the zone. With the traffic messages, routing information may also be supplied to the end user to enable the end user to travel a route over the road network that avoids the traffic congestion. Traffic information messages may also relate to accidents located in zones and routing information provides route guidance to safely avoid the accidents. The routing information may include a travel time for the route that avoids the traffic condition.

Zones used especially for location-based traffic messages may be defined as traffic zones and identified as traffic zones in the geographic database used by the navigation services provider. Zones used for location-based traffic messages may be cross-referenced (by appropriate indexes) to other types of zones, such as advertising zones and emergency zones.

### B. Levels of service

In the embodiments described above, advertising messages are sent to end users based upon the advertising zones in which the end users' computing platforms are located, as well as any restrictions associated with particular messages. According to an alternative embodiment, there may be additional factors that affect whether some or all of the advertising messages are sent to particular end users. One additional factor that may affect whether advertising messages are sent to an end user is a service level. A navigation services provider may offer different levels of service to end users. These different levels of service may cost different amounts. End users who subscribe to a higher level of service may receive fewer or no advertising messages whereas end users that subscribe to a lower level of service receive more advertising messages.

In an alternative embodiment, end users may subscribe to a preference advertising service. The preference advertising service provides the end user with advertising messages that correspond with their preferences. The end user registers his/her preferences, such as for particular franchise businesses, with the navigation services provider 328. The navigation services provider 328 maintains the end user's preferences in the ad database 398 or another database. When the end user is within an advertising zone, the end user receives advertising messages corresponding to their preferences. The end user may then receive route information for traveling to the preference business.

In one embodiment for the preference advertising service, the end user may request advertisements. For example, the end user may request an advertisement for a preferred gas station. The navigation services server determines what advertising zone the end user is located in and sends an advertising message to the end user representing the preferred gas station. The navigation services server may also send routing information to the preferred gas station associated with the advertising message.

### C. Standalone systems

As explained above, there are different kinds of mobile and portable computing platforms that end users can use to obtain geographically-based features and services. As further explained above, these different kinds of mobile and portable computing platforms include standalone systems, such as in-vehicle navigation systems. With a standalone system, the navigation application software and geographic database are located locally, i.e., with the navigation system unit in the vehicle. The standalone systems are capable of performing the route calculation and route guidance applications.

Location-based advertising can be provided to end users who use standalone computing platforms to obtain geographically-related features and services. With a standalone computing platform, the geographic database, which is stored locally, includes the advertising zone data, including any necessary indexes. An ad database, similar to the ad database described above in connection with Figure 8, is also stored locally. As the end user moves throughout the geographic region, the end user's position is determined using any appropriate means, such as positioning equipment. Then, when the end user enters an advertising zone, an advertising message is provided from the ad database (which is stored locally) to the end user via the user interface of the end user's standalone computing platform. The standalone computing platform calculates the route, travel time and route guidance information to the point of interest associated with the advertising message. Thus, a standalone computing platform provides advertising messages and route information to the end user in a similar manner as embodiments in which the advertising messages are provided from a remote location.

### D. Other ways to form advertising zones

In some of the above embodiments, advertising zones were shown as being bounded areas. Advertising zones (as well as other types of zones) are not limited to bounded areas. Advertising zones may also be defined based on accessibility, such as driving accessibility or walking accessibility. For example, stretches of an interstate highway would share advertising codes with establishments near the highway only if a ramp provides reasonable accessibility. This would allow restaurants, gas stations, and such, to advertise to passing motorists only if the passing motorists could easily get to the establishment.

Another example of an advertising zone based on accessibility is a zone that includes all the locations along roads within a defined driving distance (or driving distance) of a specific location. For example, an advertising zone may be defined for all the roads within a 15 minute driving time (or distance) of an office building.

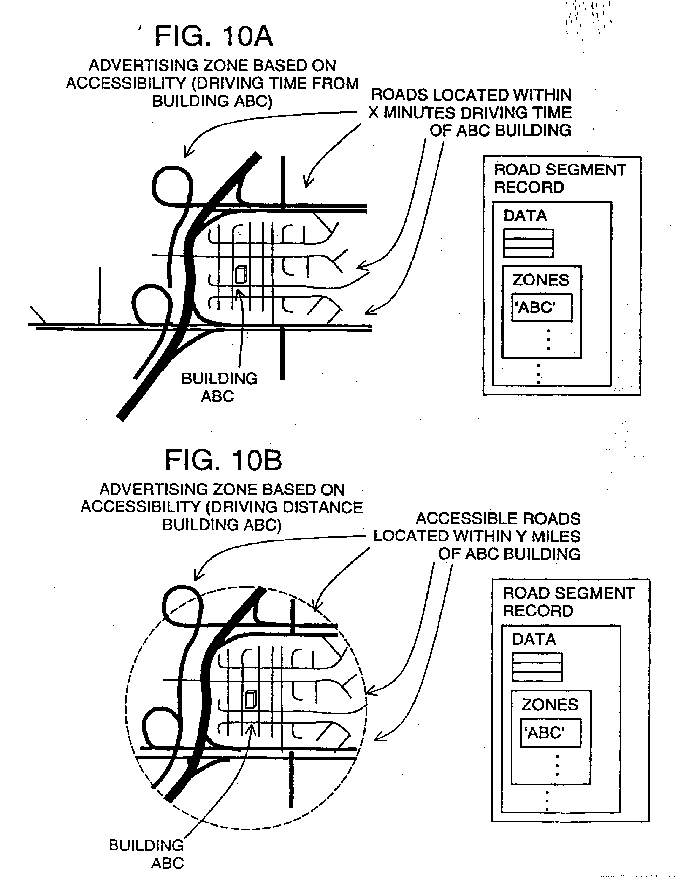

Figures 10A and 10B show examples of advertising zones based on accessibility.

### E. Advertising Points

Another way to facilitate the delivery of location-based advertising messages is to designate points along navigable roads as locations at which advertising messages may be delivered. This method would establish 'virtual billboard' locations along roads in a geographic region. A navigation services provider would then enter into agreements with advertisers to deliver messages to end users who pass the established 'virtual billboard' locations.

According to this embodiment, the virtual billboard locations would be designated at specific locations along road segments. The locations selected for virtual billboard locations may be appropriately spaced from intersections so that advertising messages associated with the locations do not interfere with any maneuvering guidance to be provided at the intersection.

As in some of the embodiments described above, a navigation services provider 328 agrees to deliver advertising messages to end users. In this embodiment, the advertising message is delivered to an end user who travels past the virtual billboard location. The end user may then request routing information to travel to the point of interest associated with the advertising message.

According to this embodiment, as an end user travels along roads in a geographic region, the end user is in communication with a navigation services provider 328. The end user may be receiving navigation-related services from the navigation services provider or alternatively, the end user may not be receiving navigation-related services. While the end user is traveling along roads, the end user's position is determined. The location of the end user is determined using any means, such as positioning equipment (e.g., GPS, inertial sensors, and so on) associated with the end user's computing platform, by user input, etc. The end user's location is matched to data representing roads in the geographic region. The data that represent roads also include data that represent locations along the roads at which advertising messages are to be provided (e.g., virtual billboard locations). When the end user's location passes the location of the virtual billboard, the end user is provided with an advertising message. Upon receiving the advertising message, the end user may request routing information for a point of interest associated with the advertising message. In this embodiment, the navigation services server receives the request along with updated position information from the end user. The route, travel time and route guidance to the point of interest is then calculated from the current position of the end user to the point of interest. When calculating the route information, the route calculation application may consider traffic and road conditions. The navigation services server 320 sends the route, travel time and route guidance information to the end user via the data network 370. The end user receives the route information, and in one embodiment is informed through the user interface of the route and route travel time to the point of interest. The user may then decide whether to travel to the point of interest associated with the advertising message relying on the route guidance information.

This embodiment has numerous advantages over traditional, physical billboards. For example, a virtual billboard is not subject to local ordinances or zoning restrictions. In addition, the advertising message provided by a virtual billboard can be changed easily.

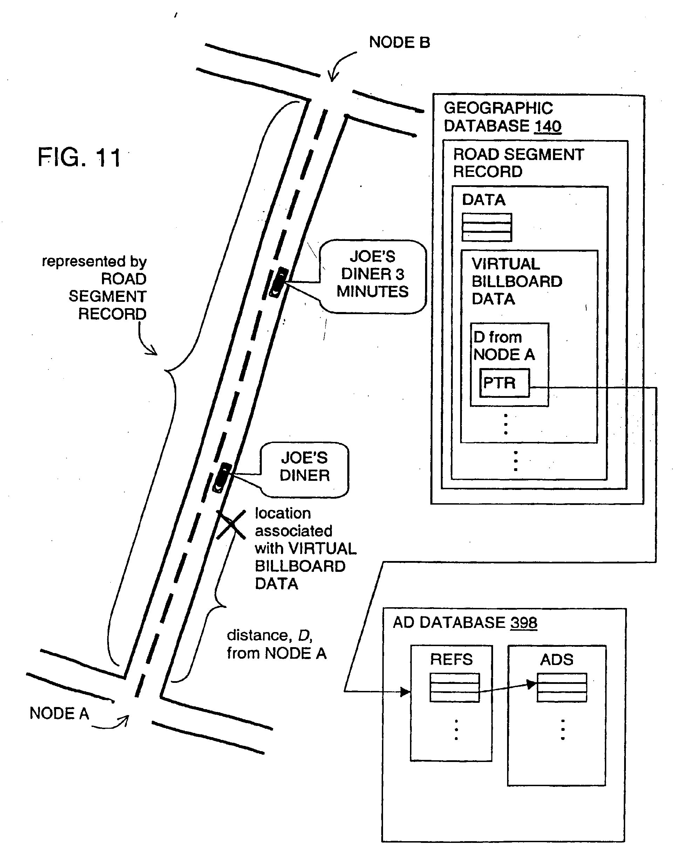

Figure 11 illustrates this embodiment.

### F. Dynamic advertising zones

In some of the above embodiments, advertising zones were described as being defined with respect to data contained in a geographic database used to provide navigation-related features and services. In an alternative embodiment, advertising zones may be defined dynamically. Dynamic advertising zones are not defined permanently with respect to data contained in a geographic database. Instead, dynamic advertising zones may be defined and used on an as-needed basis, with respect to the geographic data.

### G. Physical Billboards

Another way to facilitate location-based advertising is to use physical billboards. Physical billboards 418 (see Figure 8) are generally positioned along the roadsides of road segments for viewing by passing end users. Upon viewing a physical billboard, the end user may request information regarding the physical billboard from the navigation services provider 328. Information regarding the physical billboard may include an advertising message, a route to a point of interest associated with the billboard, an estimated travel time to the point of interest, route guidance to the point of interest, and any other information regarding the physical billboard.

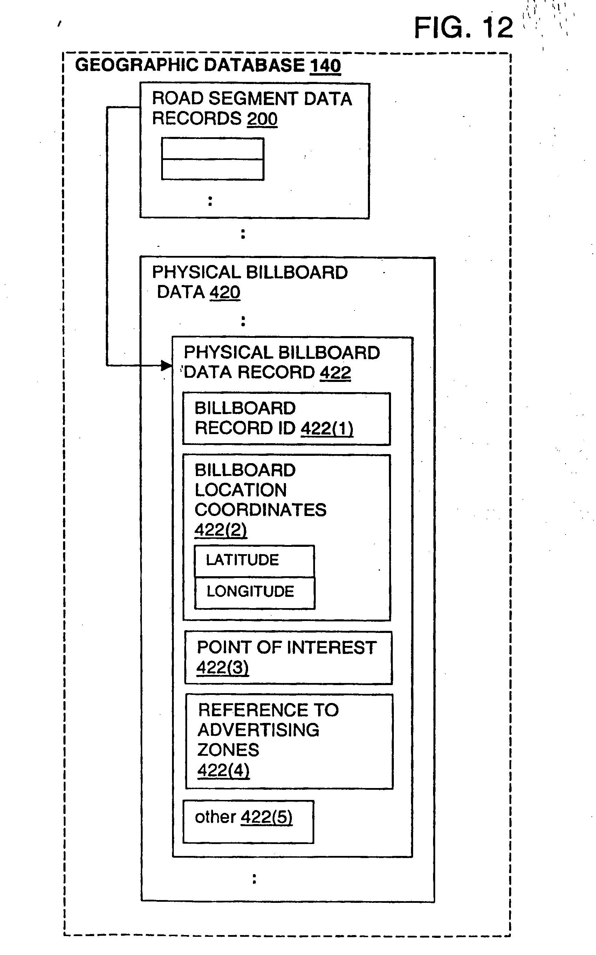

In one embodiment, the geographic database 140 includes data 420 that represent physical billboards located within the geographic region 100. Referring to Figure 12, each physical billboard data record 422 represents a physical billboard located within the geographic region 100. Figure 12 illustrates the components of the physical billboard data record 422. The physical billboard data record 422 includes a billboard record ID 422(1) by which the physical billboard data record 422 is identified in the geographic database 140. In addition, the physical billboard data record 422 includes attributes that describe the represented physical billboard.
In Figure 12, the physical billboard data record 422 includes billboard location data 422(2). In one embodiment, the location data provides the position of the represented physical billboard along a road segment. In another embodiment, the location data may be the geographic coordinates (e.g., the latitude and longitude) of the represented physical billboard. The physical billboard data record 422 may also include point of interest data 422(3) that identifies a point of interest associated with the represented physical billboard. In one embodiment, the point of interest associated with the represented billboard is a business, such as a restaurant or a retail store. A single point of interest may be associated with the represented physical billboard or many points of interest may be associated with the represented physical billboard, such as a business district of a town's chamber of commerce. The point of interest data 422(3) may include location information for the point of interest, such as latitude and longitude coordinates or address information. The points of interest data 422(3) may also include data that refers to the point of interest data records 222 for the represented point of interest 124. Additionally, indexes 232 may be used to cross-reference the point of interest and the associated physical billboard.

Referring to Figure 12, the physical billboard data record 422 may also include data 422(4) that identifies the advertising zone(s) 250 in which the represented physical billboard is located. Furthermore, the physical billboard data record 422 may also include other data 422(5).

The road segment data record 200 may include data that identifies the physical billboards located on the represented road segment. In one embodiment, the data that identifies the physical billboard also refers to the physical billboard data records 422 that represent the physical billboards located on the represented road segment. Additionally, the road segment data may identify the direction of travel for viewing the physical billboard. Furthermore, the advertising zone data records 280 may also include data that identifies the physical billboards located within the represented advertising zone. In one embodiment, an advertising zone may be associated directly with a physical billboard. For example, the boundaries of the advertising zone may encompass the viewing area for the physical billboard. In one embodiment, the data that identifies the physical billboard also refers to the physical billboard data records 422 that represent the physical billboards located within the advertising zone.

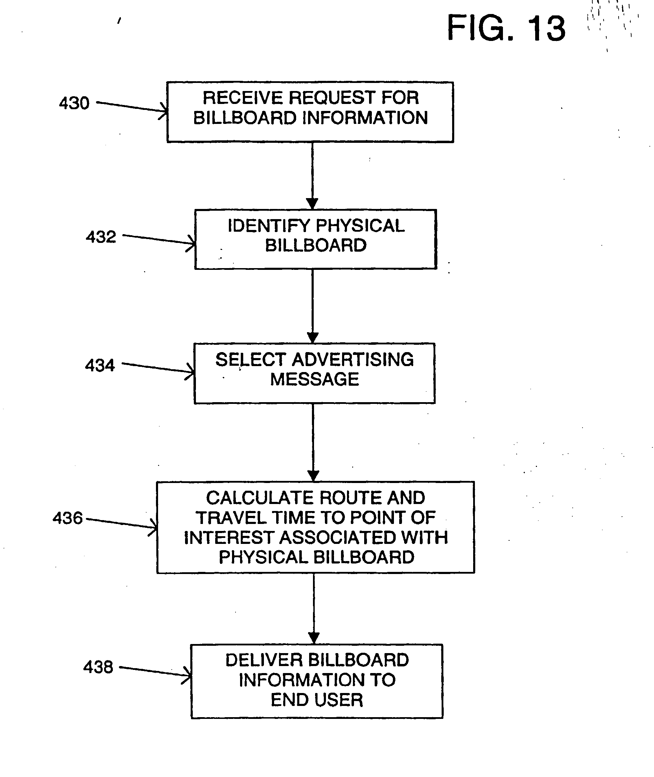

Figure 13 is a flow chart of the operations of the navigation services server 320 for providing information regarding a physical billboard according to one embodiment. Upon viewing the physical billboard, the end user requests information regarding the physical billboard from the navigation services provider 328. To request the information, the end user enters an input on the user interface of the computing platform 330. The input may be a verbal request, such as "billboard," a billboard reference number (e.g., "billboard 2532") or a business name on the billboard (e.g., "Joe's Diner"). Additionally, the input may be keyed through the user interface. The computing platform 330 then sends the request for information regarding the physical billboard over the data network 370 to the navigation services server 320. Combined with the request is data that indicates the end user's current position and identification of the end user. The request may also include a demand for specific information, such as a route to the point of interest associated with the physical billboard, an estimated travel time to the point of interest, route guidance to the point of interest, advertisements, business hours for the point of interest or any other information.

Referring to Figure 13, at step 430, the navigation services server 320 receives the request for information regarding the physical billboard, current position of the end user, identification of the end user, and any other information. To provide the billboard information, the navigation services server 320 implements a physical billboard application 428 (see Figure 8). At step 432, the physical billboard application 428 identifies the physical billboard viewed by the end user. The physical billboard application 428 identifies the physical billboard using the geographic database 140. In one embodiment, the physical billboard is identified using the end user's current position to determine the physical billboard located within the end user's view. The physical billboard may also be identified using the reference number or name entered by the end user. In an alternative embodiment, the physical billboard may be identified by determining the advertising zone in which the end user is located.

Once the physical billboard application 428 has identified the physical billboard viewed by the end user, the physical billboard application 428 retrieves from the ad database 398 the advertising messages associated with the physical billboard viewed by the end user (step 434 in Figure 13). The physical billboard application 428 also checks the ad database 398 for any restrictions on delivery of the advertising messages. Moreover, the physical billboard application may also select an advertising message that matches the identified end user's demographics. For example, if the identified end user drives a minivan, the advertising message selected may have a family theme. In an alternative embodiment, the physical billboard application 428 does not select an advertising message skipping step 434.

In one embodiment, the physical billboard is associated with a point of interest. The point of interest may be located a short distance from the physical billboard or easily accessible from the physical billboard. Alternatively, the point of interest associated with the physical billboard may be a considerable distance from the physical billboard or accessible from the physical billboard over a complex route. The geographic database 140 or the ad database 398 may be used to identify the point of interest associated with the physical billboard. In one embodiment, the navigation services server 320 implements the route calculation application to provide route information from the end user's current position to the point of interest associated with the physical billboard. The ad database 398 or the geographic database 140 supplies the location of the point of interest associated with the physical billboard to the route calculation application. The route calculation application calculates a route and an estimated route travel time from the end user's current location to the point of interest associated with the billboard (step 436 in Figure 13). As discussed above, the route calculation application may consider historic traffic conditions, road conditions and/or real time traffic information when calculating the route and estimated route travel time.

In addition, the route guidance application may be used to provide maneuvering instructions for the route from the end user's current position to the advertised point of interest. The route, route travel time and route guidance are supplied to the physical billboard application 428. The navigation services server 320 may also retrieve specific information regarding the point of interest, such as business hours, to satisfy the request received from the end user. The physical billboard application 428 may supply the end user with the advertising message, route, travel time, route guidance information and/or any other information. At step 438, the physical billboard application 428 sends the billboard information (e.g., advertising message, route, travel time, route guidance information and/or any other information) to the end user. In the embodiment of Figure 8, the billboard information is sent over the data network 370 to the end user's computing platform 330. On the end user's computing platform 330, the billboard information from the navigation services provider 320 is received and delivered to the end user. The user interface of the end user's computing platform 330 delivers the billboard information to the end user. After the end user receives the billboard information, the navigation services server may also implement the features described above in conjunction with the advertising message.

### G. Advertising By Route

Another way to facilitate location-based advertising is to provide advertising messages according to a route traveled by the end user. In one embodiment, when the end user commences a trip, the end user requests a route from the end user's current position to a destination from the navigation services server 320. The end user's computing platform 330 supplies the end user's identification, current position and destination to the navigation services server 320 via the data network 370. The navigation services server 320 performs the route calculation application to determine a route comprising interconnected road segments using the geographic database 140 as described above. The navigation services server 320 then supplies the route to the end user's computing platform 330.

In one embodiment, the navigation services server 320 uses the calculated route to identify the advertising zone(s) that the end user is located in, will be located in or will be passing through. The calculated route is supplied to the virtual billboard application 388. Using the geographic database 140, the virtual billboard application 388 identifies the advertising zone(s) using the component road segments comprising the calculated route. These road segments comprising the calculated route are future positions of the end user. The virtual billboard application 388 may then provide the advertising messages to the end user as described above in conjunction with Figure 9.

In another embodiment, the calculated route may be used to form dynamic advertising zones. The dynamic. advertising zones may be defined and used on an as-needed basis along the calculated route. For example, for a route having a distance of 100 miles, dynamic advertising zones may be formed in an area half way to trip completion of the route.

It is intended that the foregoing detailed description be regarded as illustrative rather than limiting and that it is understood that the following claims including all equivalents are intended to define the scope of the invention.

## Claims

1. A method of delivering advertising to mobile computing platforms (330) comprising:
determining a position of a mobile computing platform as the mobile computing platform travels in a geographic region (100);
determining (400) in which of a plurality of advertising zones (250) into which the geographic region is divided the mobile computing platform is located;
obtaining (402) an advertising message associated with said advertising zone; and
calculating (404) a route for the mobile computing platform to travel from the position of the mobile computing platform to a point of interest (124) associated with the advertising message;
**characterised in that** the method comprises:
calculating a travel time for said route from the current position of the mobile computing platform to the point of interest associated with the advertising message;
incorporating the calculated travel time into the advertising message; and
providing (406,410) the mobile computing platform with the advertising message with the incorporated travel time.

2. The method of Claim 1 wherein said advertising-messages are provided over a wireless communications link to the mobile computing platform from a navigation services server.

3. The method of Claim 1 wherein the route is calculated by a navigation services server and provided over a wireless communications link to the mobile computing platform.

4. The method of Claim 1 wherein the route is calculated by a route calculation program in the mobile computing platform.

5. The method of Claim 1 wherein the route calculation considers traffic conditions of the route from the position of the mobile computing platform to travel to the point of interest.

6. The method of claim 1 further comprising:
after the step of providing the advertising message to the mobile computing platform, providing the advertising message via a user interface of the mobile computing platform.

7. The method of claim 6 further comprising:
after the step of providing the advertising message via the user interface, detecting an input via the user interface of the mobile computing platform.

8. The method of claim 7 wherein if the input represents a selection of traveling to the point of interest, providing a route guidance via the user interface of the mobile computing platform.

9. The method of Claim 1 further comprising:
providing maneuver guidance along the route.

10. The method of claim 1, further comprising providing the mobile computing platform with route information regarding the calculated route.

11. The method of claim 10, wherein the route information comprises a distance from the current position of the mobile computing platform to the point of interest.

12. The method of Claim 1 further comprising:
determining whether the mobile computing platforms travels to the point of interest.

13. The method of Claim 12 further comprising:
if the mobile computing platform travels to the point of interest, calculating a return route from the point of interest to an original destination of the mobile computing platform.

14. The method of Claim 1 further comprising:
providing an identification of the mobile computing platform over a wireless communication link to a navigation services server; and
selecting the advertising message to be provided to the mobile computing platform based on the identification.

15. The method or Claim 1 wherein the step of determining the position identifies a physical billboard proximate the mobile computing platform.

16. The method of Claim 1 wherein the step of determining the position identifies a road segment that the mobile computing platform will be traveling based on an original route over a plurality of interconnected road segments from an origin to a destination.

17. The method of Claim 1 wherein the travel time calculation considers traffic conditions of the route from the position of the mobile computing platforms to the point of interest

18. The method of Claim 1 wherein the travel time calculation considers road conditions of the route from the position of the mobile computing platform to the point of interest.

19. A system adapted to carry out a method according to any one of the preceding claims.

## Patentansprüche

1. Verfahren der Lieferung von Werbung an mobile Rechenplattformen (330), umfassend:
Bestimmen der Position einer mobilen Rechenplattform, wenn sich die mobile Rechenplattform in einem geographischen Gebiet (100) bewegt;
Bestimmen (400), in welcher von mehreren Werbezonen (250), in die das geographische Gebiet unterteilt ist, sich die mobile Rechenplattform befindet;
Erlangen (402) einer Werbenachricht, die der Werbezone zugeordnet ist; und
Berechnen (404) einer Route für die mobile Rechenplattform, um von der Position der mobilen Rechenplattform zu einem interessierenden Punkt (124) zu fahren, der der Werbenachricht zugeordnet ist;
**dadurch gekennzeichnet, dass** das Verfahren umfasst:
Berechnen einer Fahrzeit für die Route von der aktuellen Position der mobilen Rechenplattform zu dem interessierenden Punkt, der der Werbenachricht zugeordnet ist;
Einfügen der berechneten Fahrzeit in die Werbenachricht; und
Bereitstellen (406, 410) der Werbenachricht mit der berechneten Fahrzeit für die mobile Rechenplattform.

2. Verfahren nach Anspruch 1, wobei die Werbenachrichten von einem Navigationsdienste-Server über eine drahtlose Kommunikationsverbindung der mobilen Rechenplattform zur Verfügung werden.

3. Verfahren nach Anspruch 1, wobei die Route von einem Navigationsdienste-Server berechnet wird und über eine drahtlose Kommunikationsverbindung der mobilen Rechenplattform zur Verfügung gestellt wird.

4. Verfahren nach Anspruch 1, wobei die Route von einem Routenberechnungsprogramm in der mobilen Rechenplattform berechnet wird.

5. Verfahren nach Anspruch 1, wobei die Routenberechnung Verkehrsbedingungen der Route für die Fahrt von der Position der mobilen Rechenplattform zum interessierenden Punkt berücksichtigt.

6. Verfahren nach Anspruch 1, ferner umfassend:
nach dem Schritt des Bereitstellens der Werbenachricht für die mobile Rechenplattform, Bereitstellen der Werbenachricht über eine Benutzerschnittstelle der mobilen Rechenplattform.

7. Verfahren nach Anspruch 6, ferner umfassend:
nach dem Schritt des Bereitstellens der Werbenachricht über die Benutzerschnittstelle, Erfassen einer Eingabe über die Benutzerschnittstelle der mobilen Rechenplattform.

8. Verfahren nach Anspruch 7, wobei dann, wenn die Eingabe eine Auswahl der Fahrt zu dem interessierenden Punkt repräsentiert, eine Routenführung über die Benutzerschnittstelle der mobilen Rechenplattform bereitgestellt wird.

9. Verfahren nach Anspruch 1, ferner umfassend:
Bereitstellen einer Manöverführung längs der Route.

10. Verfahren nach Anspruch 1, das ferner das Bereitstellen von Routeninformationen bezüglich der berechneten Route für die mobile Rechenplattform umfasst.

11. Verfahren nach Anspruch 10, wobei die Routeninformationen eine Entfernung von der aktuellen Position der mobilen Rechenplattform zu dem interessierenden Punkt umfassen.

12. Verfahren nach Anspruch 1, ferner umfassend:
Bestimmen, ob die mobile Rechenplattform zu dem interessierenden Punkt fährt.

13. Verfahren nach Anspruch 12, ferner umfassend:
wenn die mobile Rechenplattform zu dem interessierenden Punkt fährt, Berechnen einer Rückkehrroute vom interessierenden Punkt zu einem ursprünglichen Ziel der mobilen Rechenplattform.

14. Verfahren nach Anspruch 1, ferner umfassend:
Bereitstellen einer Kennung der mobilen Rechenplattform über eine drahtlose Kommunikationsverbindung für einen Navigationsdienste-Server; und
Auswählen der Werbenachricht, die der mobilen Rechenplattform bereitgestellt werden soll, auf der Grundlage der Kennung.

15. Verfahren nach Anspruch 1, wobei der Schritt des Bestimmens der Position eine körperliche Reklametafel in der Nähe der mobilen Rechenplattform identifiziert.

16. Verfahren nach Anspruch 1, wobei der Schritt des Bestimmens der Position einen Straßenabschnitt identifiziert, den die mobile Rechenplattform auf der Grundlage einer ursprünglichen Route über eine Vielzahl verbundener Straßenabschnitte von einem Ausgangspunkt zu einem Ziel fahren wird.

17. Verfahren nach Anspruch 1, wobei die Fahrzeitberechnung Verkehrsbedingungen der Route von der Position der mobilen Rechenplattform zum interessierenden Punkt berücksichtigt.

18. Verfahren nach Anspruch 1, wobei die Fahrzeitberechnung Straßenzustände der Route von der Position der mobilen Rechenplattform zum interessierenden Punkt berücksichtigt.

19. System, das dafür ausgelegt ist, ein Verfahren nach irgendeinem der vorangehenden Ansprüche auszuführen.

## Revendications

1. Procédé d'acheminement de publicité à des plates-formes informatiques mobiles (330), comprenant les étapes consistant à :
déterminer une position d'une plate-forme informatique mobile tandis que la plate-forme informatique mobile se déplace dans une région géographique (100) ;
déterminer (400) dans quelle zone se trouve la plate-forme informatique mobile, parmi une pluralité de zones de publicité (250) entre lesquelles est divisée la région géographique ;
obtenir (402) un message publicitaire associé à ladite zone de publicité ; et
calculer (440) un itinéraire afin que la plate-forme informatique mobile se déplace entre la position de la plate-forme informatique mobile et un point d'intérêt (124) associé au message publicitaire ;
**caractérisé en ce que** le procédé comprend les étapes consistant à :
calculer un temps de parcours pour ledit itinéraire entre la position courante de la plate-forme informatique mobile et le point d'intérêt associé au message publicitaire ;
incorporer le temps de parcours calculé dans le message publicitaire ; et
fournir (406, 410) à la plate-forme informatique mobile le message publicitaire avec le temps de parcours incorporé.

2. Procédé selon la revendication 1, dans lequel lesdits messages publicitaires sont fournis à la plate-forme informatique mobile sur une liaison de communication sans fil, à partir d'un serveur de services de navigation.

3. Procédé selon la revendication 1, dans lequel l'itinéraire est calculé par un serveur de services de navigation et est fourni par une liaison de communication sans fil à la plate-forme informatique mobile.

4. Procédé selon la revendication 1, dans lequel l'itinéraire est calculé par un programme de calcul d'itinéraire sur la plate-forme informatique mobile.

5. Procédé selon la revendication 1, dans lequel le calcul de l'itinéraire tient compte des conditions de circulation sur l'itinéraire menant de la position de la plate-forme informatique mobile au point d'intérêt.

6. Procédé selon la revendication 1, comprenant en outre l'étape consistant, après l'étape de fourniture du message publicitaire à la plate-forme informatique mobile, à fournir le message publicitaire via une interface utilisateur de la plate-forme informatique mobile.

7. Procédé selon la revendication 6, comprenant en outre l'étape consistant, après l'étape de fourniture du message publicitaire via l'interface utilisateur, à détecter une entrée via l'interface utilisateur de la plate-forme informatique mobile.

8. Procédé selon la revendication 7, dans lequel, si l'entrée représente un choix d'atteindre le point d'intérêt, il est fourni une assistance sur l'itinéraire via l'interface utilisateur de la plate-forme informatique mobile.

9. Procédé selon la revendication 1, comprenant en outre l'étape consistant à fournir sur l'itinéraire une assistance dans les manoeuvres.

10. Procédé selon la revendication 1, comprenant en outre l'étape consistant à fournir à la plate-forme informatique mobile des informations d'itinéraire, intéressant l'itinéraire calculé.

11. Procédé selon la revendication 10, dans lequel les informations d'itinéraire comprennent une distance entre la position courante de la plate-forme informatique mobile et le point d'intérêt.

12. Procédé selon la revendication 1, comprenant en outre l'étape consistant à déterminer si la plate-forme informatique mobile se déplace en direction du point d'intérêt.

13. Procédé selon la revendication 12, comprenant en outre l'étape consistant, si la plate-forme informatique mobile se déplace vers le point d'intérêt, à calculer un itinéraire de retour entre le point d'intérêt et une destination initiale de la plate-forme informatique mobile.

14. Procédé selon la revendication 1, comprenant en outre les étapes consistant à :
fournir une identification de la plate-forme informatique mobile à un serveur de services de navigation sur une liaison de communication sans fil ; et
sélectionner le message publicitaire à fournir à la plate-forme informatique mobile en fonction de l'identification.

15. Procédé selon la revendication 1, dans lequel l'étape de détermination de la position identifie un panneau d'affichage physique à proximité de la plate-forme informatique mobile.

16. Procédé selon la revendication 1, dans lequel l'étape de détermination de la position identifie un segment routier que la plate-forme informatique mobile va parcourir sur la base d'un itinéraire original, parmi une pluralité de segments routiers interconnectés entre une origine et une destination.

17. Procédé selon la revendication 1, dans lequel le calcul du temps de parcours tient compte des conditions de circulation sur l'itinéraire entre la position de la plate-forme informatique mobile et le point d'intérêt.

18. Procédé selon la revendication 1, dans lequel le calcul du temps de parcours tient compte de l'état de la route sur l'itinéraire entre la position de la plate-forme informatique mobile et le point d'intérêt.

19. Système conçu pour exécuter un procédé selon l'une quelconque des revendications précédentes.
